# EUROPEAN PATENT SPECIFICATION

(11) **EP 2 323 285 B1**
(45) Date of publication and mention of the grant of the patent: **07.11.2018**
(21) Application number: 09811046.3
(22) Date of filing: 02.09.2009
(51) Int. Cl.: H04B 10/00, H04J 3/16

(54) **METHOD AND APPARATUS FOR TRANSMITTING 10 GIGABIT OPTICAL FIBER CHANNEL SERVICE IN OPTICAL TRANSPORT NETWORK**
VERFAHREN UND VORRICHTUNG ZUR ÜBERTRAGUNG EINES 10-GIGABIT-GLASFASERKANALDIENSTES IN EINEM OPTISCHEN TRANSPORTNETZ
PROCÉDÉ ET DISPOSITIF DE TRANSMISSION DE SERVICE DE CANAL OPTIQUE DANS UN RÉSEAU DE TRANSPORT OPTIQUE

(30) Priority: 03.09.2008 CN 200810119592
(43) Date of publication of application: 18.05.2011
(73) Proprietor: ZTE Corporation, Shenzhen, Guangdong 518057 (CN)
(72) Inventor: SUN, Ping, Guangdong 518057 (CN); TU, Yong, Guangdong 518057 (CN)
(74) Representative: Gevers Patents
(86) International application number: PCT/CN2009/073708
(87) International publication number: WO 2010/025671

(56) References cited:
- EP-A1- 1 737 147
- WO-A1-2008/035769
- CN-A- 1 734 986
- CN-A- 1 791 057
- CN-A- 1 852 215
- CN-A- 101 013 961
- CN-A- 101 340 735
- CN-A- 101 355 821
- JP-A- 2005 328 264
- US-A1- 2004 202 198
- US-A1- 2004 202 198
- US-A1- 2007 211 750
- "Transport of IEEE 10GBASE-R in optical transport networks (OTN); G.Sup43 (02/08)", ITU-T STANDARD, INTERNATIONAL TELECOMMUNICATION UNION, GENEVA ; CH, no. G.Sup43 (02/08), 22 February 2008 (2008-02-22), pages 1-21, XP017435910, [retrieved on 2008-12-05]

## Description

### Technical Field

The present invention relates to the field of optical transport network, particularly to a method and an apparatus for transmitting a fiber channel 10 gigabit (10GFC) service in an optical transport network (OTN).

### Background

Fiber channel (FC) is one of the main technologies for a storage area network (SAN) due to its merits such as good extendibility, high bandwidth, high generality and long transmission distance etc. The rate of the fiber channel has developed from 1Gbps and 2Gbps to 4Gbps, 8Gbps and 10Gbps. Due to the need of storage extension, the FC requires wide area long distance transmission, while wavelength division multiplexing (WDM) equipment has become the effective solution for the long distance FC service due to its merit of reliable transmission and high bandwidth.

Currently, there is no unified standard as to how FC services with various rates are mapped in a wavelength division multiplexing network. Wavelength division multiplexing equipment manufacturers constantly improve FC service handling on the principle of efficiently utilizing bandwidth and flexible configuration. Optical channel transport unit (OTU), optical channel data unit (ODU) and optical channel payload unit (OPU) are data formats on relevant levels in the OTN defined in the ITU-T G.709 protocol.

FC services with rates of 1Gbps, 2Gbps, 4Gbps and 8Gbps are well adapted to the payload rate of OTU1 (2.488Gbps) or the payload rate of OTU2 (9.953Gbps) and may be mapped through combination, cascading or direct mapping with sufficient bandwidth utilization. For example, two 1GFC services may be transmitted on one OTU1 channel; a 2GFC service may be transmitted on one OTU1 channel; a 4GFC service may be transmitted on two OTU1 channels; and an 8GFC service may be transmitted on four OTU1 channels or one OTU2 channel. A 10GFC service with the rate of 10.51875Gbps can not be directly mapped into an OTU2 channel because its rate is greater than the 9.953Gbps payload rate of OTU2 but is far less than the 39.813Gbps payload rate of OTU3. But if three 10GFC services are combined and transmitted on one OTU3 channel, great waste of bandwidth will be caused.

However, during the process of realizing the present invention, it is discovered that the following problems exist at least in pertinent prior art: currently, the common solution is to increase the transmission rate of OTU2 to adapt to the 10GFC service. As the rate is special, although the frame format of OTU2 meets the standard, 10GFC OTU2 is not the standard OTU2 any more, resulting in that it is difficult for the 10GFC OTU2 and the standard OTU2 to be mixed and converged, which leads to the difficulty of OTU3 application.

US 2007/0211750 A1 discloses a method, data interface and device for transporting data from a high-speed Ethernet to an optical transport network.

### Summary

In order to solve one of the above stated problems, the aim of the embodiments of the present invention is to provide a method and an apparatus for transmitting a 10GFC service in an OTN, helping to realize the hybrid and convergent access of multiple different 10G services, thus the bandwidth resource of the OTN can be utilized more efficiently.

According to one aspect of the present invention, a method for sending a 10GFC service in an OTN is provided.

According to the present invention, the method for sending a 10GFC service in the OTN comprises:
a receiving step, receiving a 10GFC service signal with a rate of 10.51875Gbps from a user side;
an adjusting step, adjusting a rate of the received 10GFC service signal with the rate of 10.51875Gbps to a rate of a 10 gigabit Ethernet (10GE) signal, wherein the rate of the 10GE signal is 10.3125 Gbps;
a framing step, mapping the 10GFC service signal with the rate of the 10GE signal into an OTU2e/ODU2e signal, or mapping the 10GFC service signal with the rate of the 10GE signal into an OTU1e/ODU1e signal; and
a sending step, sending the OTU2e/ODU2e signal to the OTN for transmission, or sending the OTU1e/ODU1e signal to the OTN for transmission;
wherein the adjusting step may comprise:
   decoding the 10GFC service signal with the rate of 10.51875Gbps by way of 64/66B to get a 10GFC service signal with a rate of 10.2Gbps; and
   coding the 10GFC service signal with the rate of 10.2Gbps to get the 10GFC service signal with the rate of the 10GE signal.

Preferably, the framing step may comprise: if the 10GFC service signal with the rate of the 10GE signal is finally mapped into the OTU2e/ODU2e signal, fixedly filling the 10GFC service signal with the rate of the 10GE signal and encapsulating the 10GFC service signal after the fixed filling into an OPU, or, if the 10GFC service signal with the rate of the 10GE signal is finally mapped into the OTU1e/ODU1e signal, encapsulating the 10GFC service signal with the rate of the 10GE signal into an OPU; and
adding ODU overhead to the OPU, encapsulating it into an ODU frame, and outputting the ODU2e signal or the ODU1e signal.

Preferably, the framing step may further comprise: adding OTU overhead to the ODU2e signal or the ODU1e signal, encapsulating the ODU2e signal or the ODU1e signal into an OTU frame, and outputting the OTU2e signal or the OTU1e signal.

According to another aspect of the present invention, an apparatus for sending a 10GFC service in an OTN is provided.

According to the present invention, the apparatus for sending a 10GFC service in the OTN comprises:
a receiving module, used for receiving a 10GFC service signal with a rate of 10.51875Gbps from a user side;
a rate adapting module, used for adjusting a rate of the received 10GFC service signal with the rate of 10.51875Gbps to a 10GFC service signal with a rate of a 10GE signal;
an OTU/ODU framing module, used for mapping the 10GFC service signal with the rate of the 10GE signal into an OTU2e/ODU2e signal, or mapping the 10GFC service signal with the rate of the 10GE signal into an OTU1e/ODU1e signal; and
a sending module, used for sending the OTU2e/ODU2e signal to the OTN for transmission, or sending the OTU1e/ODU1e signal to the OTN for transmission,
wherein the rate adapting module may comprise: a decoding unit, used for decoding the 10GFC service signal with the rate of 10.51875Gbps by way of 64/66B to get a 10GFC service signal with a rate of 10.2Gbps; and
a coding unit, used for coding the 10GFC service signal with the rate of 10.2Gbps to get the 10GFC service signal with the rate of the 10GE signal.

Preferably, the OTU/ODU framing module may comprise:
an OPU mapping unit, used for fixedly filling the 10GFC service signal with the rate of the 10GE signal and encapsulating the 10GFC service signal after the fixed filling into an OPU if the 10GFC service signal with the rate of the 10GE signal is finally mapped into the OTU2e/ODU2e signal, or, encapsulating the 10GFC service signal with the rate of the 10GE signal into an OPU if the 10GFC service signal with the rate of the 10GE signal is finally mapped into the OTU1e/ODU1e signal;
an ODU framing unit, used for adding ODU overhead to the OPU, encapsulating it into an ODU frame, and outputting the ODU2e signal or the ODU1e signal; and
an OTU framing unit, used for adding OTU overhead to the ODU2e signal or the ODU1e signal, encapsulating the ODU2e signal or the ODU1e signal into an OTU frame, and outputting the OTU2e signal or the OTU1e signal.

According to still another aspect of the present invention, a method for receiving a 10GFC service in an OTN is provided.

According to the present invention, the method for receiving a 10GFC service in the OTN comprises:
a receiving step, receiving an OTU2e/ODU2e signal which carries a 10GFC service from a network side, or receiving an OTU1e/ODU1e signal which carries a 10GFC service from a network side;
a de-framing step, de-framing the received OTU2e/ODU2e signal into a 10GFC service signal with a rate of a 10GE signal, or de-framing the received OTU1e/ODU1e signal into a 10GFC service signal with a rate of a 10GE signal rate;
a restoring step, adjusting the rate of the 10GFC service signal with the rate of the 10GE signal to a 10GFC service signal with a rate of 10.51875Gbps; and
a sending step, sending the 10GFC service signal with a rate of 10.51875Gbps to a user side,
wherein the restoring step further comprises:
   decoding, the 10GFC service signal with the rate of the 10GE signal to get a 10GFC service signal with a rate of 10.2Gbps; and
   coding, the 10GFC service signal with the rate of 10.2Gbps to get the 10GFC service signal with the rate of 10.51875Gbps by way of 64/66B.

Preferably, the de-framing step may comprise:
judging whether the signal received from the network side is an OTU signal or an ODU signal; If it is an OTU signal, de-framing the OTU signal and outputting an ODU signal; and
de-framing the ODU signal, outputting an OPU signal, and de-mapping the OPU signal into the 10GFC service signal with the rate of the 10GE signal.

According to yet still another aspect of the present invention, an apparatus for receiving a 10GFC service in an OTN is provided.

According to the present invention, the apparatus for receiving a 10GFC service in the OTN comprises:
a receiving module, used for receiving an OTU2e/ODU2e signal which carries a 10GFC service from a network side, or receiving an OTU1e/ODU1e signal which carries the 10GFC service from a network side;
an ODU/OTU de-framing module, used for de-framing the received OTU2e/ODU2e signal into a 10GFC service signal with a rate of a 10GE signal, or de-framing the received OTU1e/ODU1e signal into a 10GFC service signal with a rate of a 10GE signal;
a rate restoring module, used for adjusting the rate of the 10GFC service signal with the rate of the 10GE signal to a 10GFC service signal with a rate of 10.51875Gbps; and
a sending module, used for sending the 10GFC service signal with the rate of 10.51875Gbps to a user side;
wherein the rate restoring module may be further used to
   decode the 10GFC service signal with the rate of the 10GE signal to get a 10GFC service signal with a rate of 10.2Gbps; and
   code the 10GFC service signal with the rate of 10.2Gbps to get the 10GFC service signal with the rate of 10.51875Gbps by way of 64/66B.

Preferably, the ODU/OTU de-framing module may comprise:
an OTU de-framing unit, used for de-framing the OTU2e signal or the OTU1e signal which carries the 10GFC service received from the network side by way of OTU and outputting an ODU2e signal or an ODU1e signal;
an ODU de-framing unit, used for de-framing the ODU2e signal or the ODU1e signal by way of ODU and outputting an OPU signal; and
an OPU de-mapping unit, used for de-mapping the OPU signal into the 10GFC service signal with the rate of the 10GE signal.

It can be seen from the technical solutions provided by the embodiments of the present invention that, by mapping the 10GFC service signal into the OTU2e/ODU2e signal or the OTU1e/ODU1e signal via rate adaptation mechanism and transmitting the mapped signal in the OTN, the following advantages are obtained:
1) It helps to realize flexible configuration of access service of the 10G service optical transponder board. At least, it can share the same single board hardware with the 10GE service, which results in expanding the application scope of the single board and saving equipment cost and maintenance cost.
2) It helps to realize the hybrid and convergent access of multiple different 10G services, thus the bandwidth resource of the OTN can be utilized more efficiently.
3) As the OTU2e/ODU2e signal or the OTU1e/ODU1e is defined in the standard, the relevant tester is already available and can test the OTN levels.

### Brief Description of the Drawings

Fig. 1 is a flow chart showing a method for sending a 10GFC service in the OTN according to an embodiment of the present invention.
Fig. 2 is a flow chart showing a method for framing the ODU/OTU according to an embodiment of the present invention.
Fig. 3 is a block diagram showing an apparatus for sending a 10GFC service in the OTN according to an embodiment of the present invention.
Fig. 4 is a flow chart showing a method for receiving a 10GFC service in the OTN according to an embodiment of the present invention.
Fig. 5 is a flow chart showing a method for de-framing the ODU/OTU according to an embodiment of the present invention.
Fig. 6 is a block diagram showing an apparatus for receiving a 10GFC service in the OTN according to an embodiment of the present invention.

### Detailed Description

To further clarify the aim, technical solutions and advantages of the embodiments of the present invention, in the following, the embodiments of the present invention are further described in detail in combination with the drawings. It should be understood that the schematic embodiments and descriptions thereof are intended to illustrate the present invention and not to limit the present invention.

### Embodiment I

An embodiment of the present invention provides a method for sending a 10GFC service in the OTN. First, the rate of a 10GFC service signal received from a user side is adjusted from a standard rate (i.e. 10.51875Gbps) to a rate of a 10GE signal (i.e. 10.3125Gbps), then, the adjusted 10GFC service signal is mapped into an OTU2e/ODU2e signal or into an OTU1e/ODU1e signal, and finally, the OTU2e/ODU2e signal or the OTU1e/ODU1e signal is sent to the OTN for transmission.

In this embodiment, the ODU1e signal is an ODU signal with the rate of 10.3558Gbps defined in the ITU-T Series G, Supplement 43. The ODU2e signal is an ODU signal with the rate of 10.3995Gbps defined in ITU-T Series G, Supplement 43.

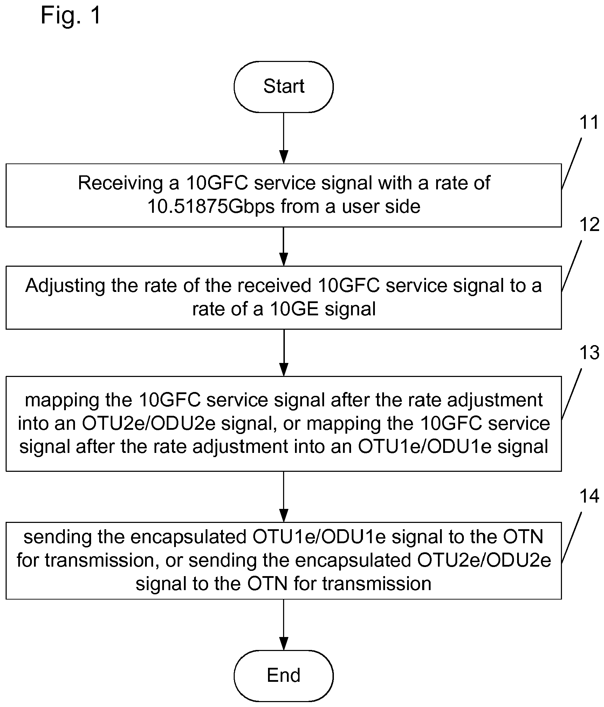

As shown in Fig. 1, Fig. 1 is a flow chart showing a method for sending a 10GFC service in the OTN according to an embodiment of the present invention. The specific steps are as follows:
Step 11, receiving a 10GFC service signal with a rate of 10.51875Gbps from a user side.
Step 12, adjusting the rate of the received 10GFC service signal to a rate of a 10GE signal.

That is to say, the rate of the 10GFC service signal received in Step 11 is adjusted from the standard 10.51875Gbps to the rate of the 10GE signal which is 10.3125Gbps, i.e. the prescribed standard rate of the 10GE service.

The adjustment in this step may be realized by the following three ways:
1) Under the condition that bandwidth is not lost, the 10GFC service signal is firstly decoded by way of 64B/66B to get a 10GFC service signal with a rate of 10.2Gbps, and then it is decoded by the optimal coding way to get a 10GFC service signal with a rate of 10.3125Gbps.
2) Idle (idle frames) and others in the 10GFC service are compressed by way of generic framing procedure (GFP) encapsulation to make its effective bandwidth become 10.3125Gbps.
3) Data is cached by using the first in first out (FIFO) register to reduce bandwidth to 10.3125Gbps. In this embodiment, the way of realization of rate adjustment is not limited.

Step 13, mapping the 10GFC service signal after the rate adjustment into an OTU2e/ODU2e signal, or mapping the 10GFC service signal after the rate adjustment into an OTU1e/ODU1e signal, and then executing Step 14.

In this embodiment, in case of direct transmission on line, the 10GFC service signal is encapsulated into the OTU2e signal or OTU1e signal, and users can choose to encapsulate it into the OTU2e signal or the OTU1e signal according to specific need. In case that it is required to conduct cross changeover on a back plane, the 10GFC service signal is encapsulated into the ODU2e signal or the ODU1e signal.

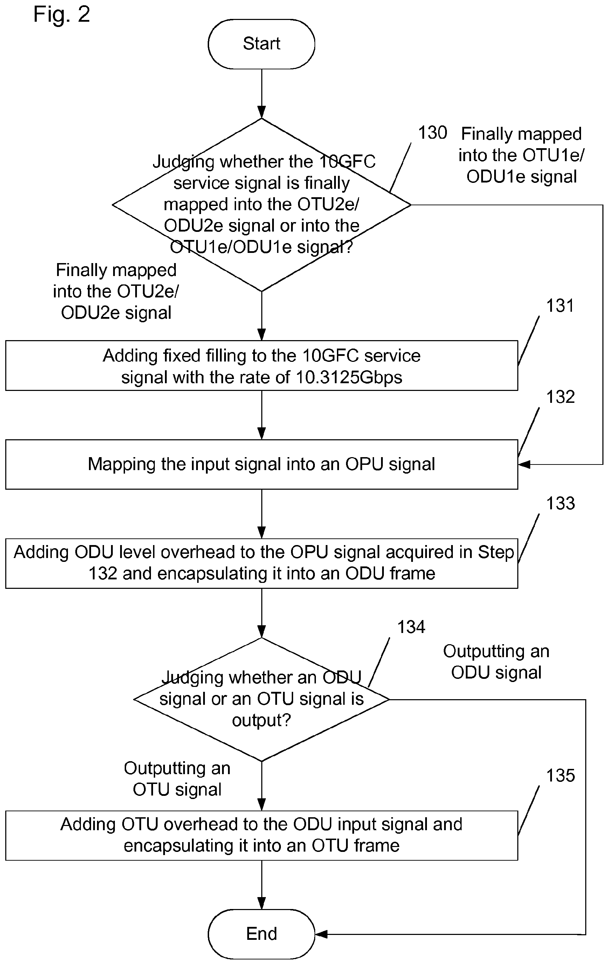

In the embodiment of the present invention, Step 13 comprises the following steps as shown in Fig. 2.

Step 130, judging whether the 10GFC service signal is finally mapped into the OTU2e/ODU2e signal or mapped into the OTU1e/ODU1e signal. If it is finally mapped into the OTU2e/ODU2e signal, Step 131 is executed. If it is finally mapped into the OTU1e/ODU1e signal, Step 132 is executed.

Step 131, adding fixed filling to the 10GFC service signal with the rate of 10.3125Gbps, and then executing Step 132.

If the 10GFC service signal with the rate of 10.3125Gbps is finally mapped into the OTU2e/ODU2e signal, fixed filling is performed to the 10.3125Gbps signal and then it is encapsulated into OPU payload. In this step, the fixed filling means fixed filling bytes, which is to meet rate requirement by adding certain amount of bytes at certain locations but not limiting the specific value of the bytes, while the signal is received, the bytes filled are removed at the location of filling and the information in such bytes are not processed.

Step 132, mapping the input signal into an OPU signal.

That is to say, the signal in Steps 130 or 131 is mapped into an OPU signal. If the 10GFC service signal is finally mapped into the OTU1e/ODU1e signal, no fixed filling is needed, and instead, the 10GFC service signal is directly encapsulated into the OPU signal.

Step 133, adding ODU level overhead to the OPU signal acquired in Step 132 and encapsulating it into an ODU frame.

Step 134, judging whether an ODU signal or an OTU signal is output. If an OTU signal is output, Step 135 is executed. If an ODU signal is output, the signal is output directly.

Step 135, adding OTU overhead to the ODU input signal and encapsulating it into an OTU frame.

Steps 130 ∼135 accomplish the process of mapping the 10GFC service signal into the OTU2e/ODU2e signal or mapping the 10GFC service signal into the OTU1e/ODU1e signal, and then Step 14 is executed.

Step 14, sending the encapsulated OTU1e/ODU1e signal to the OTN for transmission, or sending the encapsulated OTU2e/ODU2e signal to the OTN for transmission.

It can be known from the above stated technical solution that, by mapping the 10GFC service signal into the OTU2e/ODU2e signal or the OTU1e/ODU1e signal, on the one hand, it helps to realize flexible configuration of access service of the 10G service optical transponder board, wherein it can at least share the same single board hardware with the 10GE service, expanding the application scope of the single board, and saving equipment cost and maintenance cost, and on the other hand, it helps to realize the hybrid and convergent access of multiple different 10G services, thus the bandwidth resource of the OTN can be utilized efficiently.

In order to realize the method embodiment as above, another embodiment of the present invention provides an apparatus for sending a 10GFC service in the OTN. It should be noted first that, as the following embodiment is for realizing the foregoing method embodiment, this apparatus is set for realizing all steps of the foregoing method, taking into account that the present invention is limited by the scope of the appended claims. And in the following description, the content same as the foregoing method is omitted here to save the length of this paper.

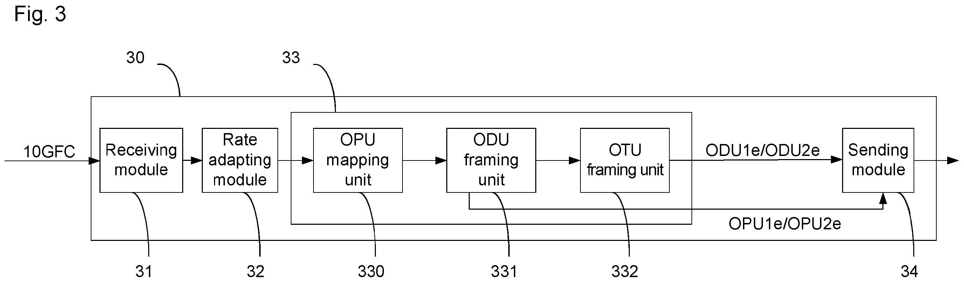

As shown in Fig. 3, Fig. 3 is a block diagram showing an apparatus for sending a 10GFC service in the OTN according to an embodiment of the present invention. The apparatus 30 comprises:
A receiving module 31, which is used to receive a 10GFC service signal from a user side, the rate of the 10GFC service signal is 10.51875Gbps;
A rate adapting module 32, which is used to adjust the rate of the received 10GFC service signal to a rate of a 10GE signal; i.e. to adjust the rate of the received 10GFC service signal from 10.51875Gbps to 10.3125Gbaps;
An OTU/ODU framing module 33, which is used to map the 10GFC service signal after the rate adjustment into an OTU2e/ODU2e service signal, or map the 10GFC service signal after the rate adjustment into an OTU1e/ODU1e service signal;
That is to say, the 10GFC service signal with the rate of 10.3125Gbps is mapped into the OTU2e/ODU2e service signal, or the 10GFC service signal with the rate of 10.3125Gbps is mapped into the OTU1e/ODU1e service signal;
A sending module 34, which is used to send the OTU2e/ODU2e signal to the OTN for transmission, or send the OTU1e/ODU1e signal to the OTN for transmission.

The rate adapting module 32 comprises:
A decoding unit, which is used to decode the 10GFC service signal by way of 64/66B to get a 10GFC service signal with a rate of 10.2Gbps;
A coding unit, which is used to code the 10GFC service signal with the rate of 10.2Gbps to get the 10GFC service signal with the rate of the 10GE signal, i.e. to get the rate of 10.3215Gbps.

In the embodiment of the present invention, Idle and others in the 10GFC service may also be compressed by way of GFP encapsulation to make its effective bandwidth become 10.3125Gbps, or the bandwidth may be reduced to 10.3125Gbps by way of data caching by using the FIFO register. In this embodiment, the way by which the rate adjustment is realized is not limited.

The OTU/ODU framing module 33 comprises:
An OPU mapping unit 330, which is used to perform fixed filling to the 10GFC service signal after the rate adjustment and encapsulate the fixedly filled 10GFC service signals into an OPU if the 10GFC service signal is finally mapped into the OTU2e/ODU2e signal, or is used to encapsulate the 10GFC service signal after the rate adjustment into an OPU if the 10GFC service signal is finally mapped into the OTU1e/ODU1e signal;
An ODU framing unit 331, which is used to add ODU overhead to the OPU signal, encapsulate it to an ODU frame, and output an ODU2e signal or an ODU1e signal; and
An OTU framing unit 332, which is used to add OTU overhead to the ODU2e signal or the ODU1e signal, encapsulate the ODU2e signal or the ODU1e signal into an OTU frame, and output the OTU2e signal or the OTU1e signal.

It can be known from the above stated technical solution that, by mapping the 10GFC service signal into the OTU2e/ODU2e signal or the OTU1e/ODU1e signal, on the one hand, it helps to realize flexible configuration of access service of the 10G service optical transponder board, wherein it can at least share the same single board hardware with the 10GE service, expanding the application scope of the single board, and saving equipment cost and maintenance cost, and on the other hand, it helps to realize the hybrid and convergent access of multiple different 10G services, thus the bandwidth resource of the OTN can be utilized efficiently.

### Embodiment II

Another embodiment of the present invention provides a method for receiving a 10GFC service in the OTN. First, an OTU1e/ODU1e signal or an OTU2e/ODU2e signal received from a network side is de-framed into a 10GFC service signal with a rate of a 10GE signal rate (i.e. 10.3125Gbps), then, the rate is adjusted to the standard rate of the 10GFC service signal (i.e. 10.51875Gbps), and finally, it is sent to an FC device at a user side.

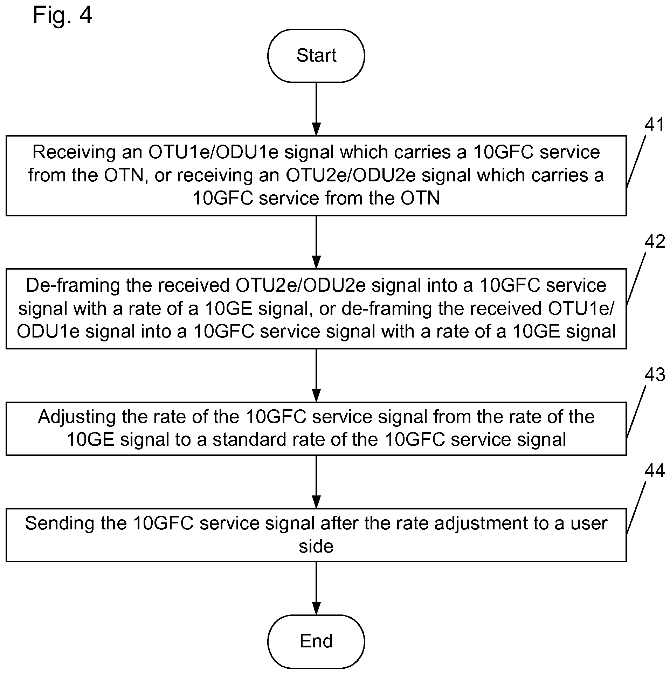

As shown in Fig. 4, Fig. 4 is a flow chart showing a method for receiving a 10GFC service in the OTN according to an embodiment of the present invention. The specific steps are as follows:
Step 41, receiving an OTU1e/ODU1e signal which carries a 10GFC service from the OTN, or receiving an OTU2e/ODU2e signal which carries a 10GFC service from the OTN.
Step 42, de-framing the received OTU2e/ODU2e signal into a 10GFC service signal with a rate of a 10GE signal, or de-framing the received OTU1e/ODU1e signal into a 10GFC service signal with a rate of a 10GE signal, and then executing Step 43.

That is to say, the received OTU2e/ODU2e signal is de-framed into the 10GFC service signal with the rate of 10.3125Gbps, or the received OTU1e/ODU1e signal is de-framed into the 10GFC service signal with the rate of 10.3125Gbps, and then Step 43 is executed.

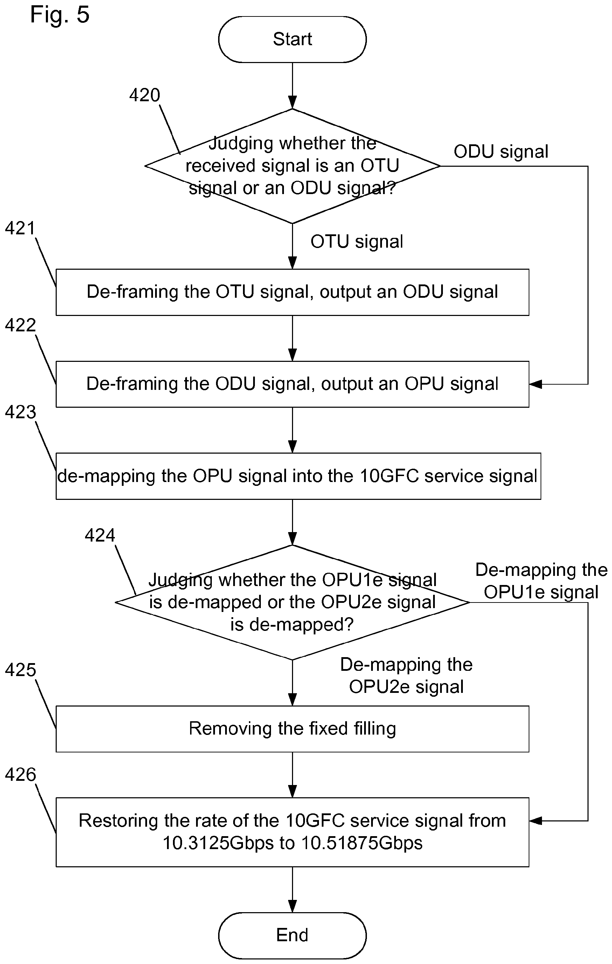

In the embodiment of the present invention, Step 42 comprises the following steps as shown in Fig. 5.

Step 420, judging whether the received signal is an OTU signal or an ODU signal. If it is an OTU signal, Step 421 is executed. If it is an ODU signal, Step 422 is executed.

Step 421, de-framing the OTU signal, output an ODU signal, and then executing Step 422.

Step 422, de-framing the ODU signal, output an OPU signal, and then executing Step 423.

Step 423, de-mapping the OPU signal into the 10GFC service signal.

Step 424, judging whether the OPUle signal is de-mapped or the OPU2e signal is de-mapped. If the OPU2e signal is de-mapped, Step 425 is executed. If the OPUle signal is de-mapped, Step 426 is executed.

The OPUle means a non-standard way of mapping a 10Gbe LAN PHY client signal into an OTU signal defined in the ITU-T Series G, Supplement 43. The 10GE LAN with the rate of 10.3125Gbps is directly mapped into the OPU payload, and then framed by way of ODU, and finally mapped into OTUle, wherein its frame format is the same as the one of the standard OTU2, but with different rates.

The OPU2e means a non-standard way of mapping a 10Gbe LAN PHY client signal into an OTU signal defined in the ITU-T Series G, Supplement 43. The 10GE LAN with the rate of 10.3125Gbps is fixedly filled, mapped into the OPU payload, and then framed by way of ODU, and finally mapped into OTU2e, wherein its frame format is the same as the one of the standard OTU2, but with different rates.

Step 425, removing the fixed filling.

Step 426, restoring the rate of the 10GFC service signal from 10.3125Gbps to 10.51875Gbps.

Steps 420∼426 accomplish the process of de-framing the received OTU2e/ODU2e signal or the received OTU1e/ODU1e signal into the 10GFC service signal with the rate of 10.3125Gbps.

Step 43, adjusting the rate of the 10GFC service signal from the rate of the 10GE signal to a standard rate of the 10GFC service signal.

Step 44, sending the 10GFC service signal after the rate adjustment to a user side.

It can be known from the above stated technical solution that, by de-mapping the OTU2e/ODU2e signal or the OTU1e/ODU1e signal into the 10GFC service signal, on the one hand, it helps to realize flexible configuration of access service of the 10G service optical transponder board, wherein it can at least share the same single board hardware with the 10GE service, expanding the application scope of the single board, and saving equipment cost and maintenance cost, and on the other hand, it helps to realize the hybrid and convergent access of multiple different 10G services, thus the bandwidth resource of the OTN can be utilized efficiently.

In order to realize the method embodiment as above, another embodiment of the present invention provides an apparatus for receiving a 10GFC service in the OTN. It should be noted first that, as the following embodiment is for realizing the foregoing method embodiment, this apparatus is set for realizing all steps of the foregoing method, taking into account that the present invention is limited by the scope of the appended claims. And in the following description, the content same as the foregoing method is omitted here to save the length of this paper.

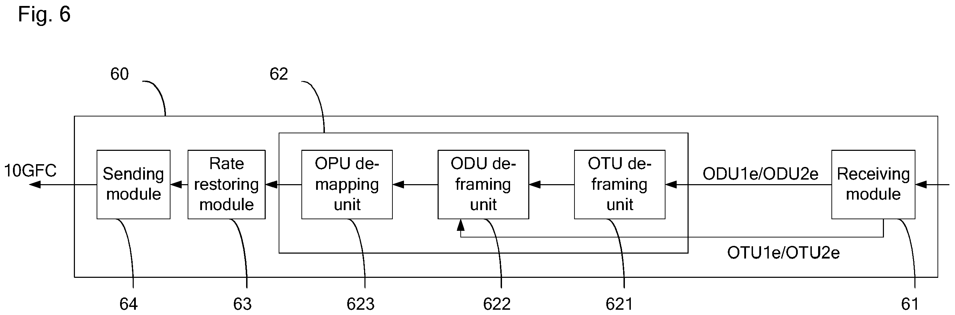

As shown in Fig. 6, Fig. 6 is a block diagram showing an apparatus for receiving a 10GFC service in the OTN according to an embodiment of the present invention. The apparatus 60 comprises:
A receiving module 61, which is used to receive an OTU2e/ODU2e signal which carries a 10GFC service from a network side, or receive an OTU1e/ODU1e signal which carries a 10GFC service from a network side;
An ODU/OTU de-framing module 62, which is used to de-frame the received OTU2e/ODU2e signal into a 10GFC service signal with a rate of alOGE signal, or de-frame the received OTU1e/ODU1e signal into a 10GFC service signal with a rate of a10GE signal;
A rate restoring module 63, which is used to adjust the rate of the 10GFC service signal from the rate of the 10GE signal to a standard rate of the 10GFC service signal;
That is to say, the rate of the 10GFC service signal output from the ODU/OTU de-framing module 62 is adjusted from 10.3125Gbps to 10.51875Gbps;
A sending module 64, which is to send the 10GFC service signal after the rate adjustment to a user side.

The ODU/OTU de-framing module 62 comprises:
an OTU de-framing unit 621, which is used to de-frame the OTU2e signal or the OTU1e signal which carries the 10GFC service received from the network side by way of OTU and output an ODU2e signal or an ODU1e signal;
an ODU de-framing unit 622, which is used to de-frame the ODU2e signal or the ODU1e signal by way of ODU and output an OPU signal; and
an OPU de-mapping unit 623, which is used to de-map the OPU signal into the 10GFC service signal with the rate of the 10GE signal, i.e. to de-map the OPU signal into the 10GFC service signal with the rate of 10.3125Gbps.

It can be known from the above stated technical solution that, by de-mapping the OTU2e/ODU2e signal or the OTU1e/ODU1e signal into the 10GFC service signal, on the one hand, it helps to realize flexible configuration of access service of the 10G service optical transponder board, wherein it can at least share the same single board hardware with the 10GE service, expanding the application scope of the single board, and saving the equipment cost and maintenance cost, and on the other hand, it helps to realize the hybrid and convergent access of multiple different 10G services, thus the bandwidth resource of the OTN can be utilized efficiently.

The above mentioned descriptions are only preferred embodiments of the present invention. For those skilled in the art, various improvements and embellishments may be made without departing from the principle of the present invention. All such improvements and embellishments are intended to be within the scope of the claims.

## Claims

1. A method for sending a fiber channel 10 gigabit, 10GFC, service in an optical transport network, OTN, comprising:
a) receiving (11), a 10GFC service signal with a rate of 10.51875Gbps from a user side;
b) adjusting (12), the received 10GFC service signal with the rate of 10.51875Gbps to a 10GFC service signal with a rate of a 10 gigabit Ethernet, 10GE, signal, the rate of the 10GE signal being 10.3125 Gbps;
c) mapping (13), the 10GFC service signal with the rate of the 10GE signal into an OTU2e/ODU2e signal, or mapping (13), the 10GFC service signal with the rate of the 10GE signal into an OTU1e/ODU1e signal; and
d) sending (14), the OTU2e/ODU2e signal to the OTN for transmission, or sending the OTU1e/ODU1e signal to the OTN for transmission,
wherein step b) comprises:
decoding, the 10GFC service signal with the rate of 10.51875Gbps by way of 64/66B to get a 10GFC service signal with a rate of 10.2Gbps; and
coding, the 10GFC service signal with the rate of 10.2Gbps to get the 10GFC service signal with the rate of the 10GE signal.

2. The method according to claim 1, wherein step c) comprises:
If the 10GFC service signal with the rate of the 10GE signal is finally mapped into the OTU2e/ODU2e signal (130), fixedly filling (131), the 10GFC service signal with the rate of the 10GE signal and encapsulating (132), the 10GFC service signal after the fixed filling into an optical channel payload unit, OPU, or, if the 10GFC service signal with the rate of the 10GE signal is finally mapped into the OTU1e/ODU1e signal (130), encapsulating (132), the 10GFC service signal with the rate of the 10GE signal into an OPU; and
adding (133), optical channel data unit, ODU, overhead to the OPU, encapsulating (133), it into an ODU frame, and outputting (134) the ODU2e signal or the ODU1e signal.

3. The method according to claim 2, wherein step c) further comprises:
adding (135), optical channel transport unit, OTU, overhead to the ODU2e signal or the ODU1e signal, encapsulating (135), the ODU2e signal or the ODU1e signal into an OTU frame, and outputting the OTU2e signal or the OTU1e signal.

4. An apparatus for sending a 10GFC service in an optical transport network, OTN, comprising:
a receiving module (31) configured for receiving a 10GFC service signal with a rate of 10.51875Gbps from a user side;
a rate adapting module (32) configured for adjusting a rate of the received 10GFC service signal with the rate of 10.51875Gbps to a 10GFC service signal with a rate of a 10GE signal;
an OTU/ODU framing module (33) configured for mapping the 10GFC service signal with the rate of the 10GE signal into an OTU2e/ODU2e signal, or mapping the 10GFC service signal with the rate of the 10GE signal into an OTU1e/ODU1e signal; and
a sending module (34) configured for sending the OTU2e/ODU2e signal to the OTN for transmission, or sending the OTU1e/ODU1e signal to the OTN for transmission,
wherein the rate adapting module (32) comprises:
a decoding unit configured for decoding the 10GFC service signal with the rate of 10.51875Gbps by way of 64/66B to get a 10GFC service signal with a rate of 10.2Gbps; and
a coding unit configured for coding the 10GFC service signal with the rate of 10.2Gbps to get the 10GFC service signal with the rate of the 10GE signal.

5. The apparatus according to claim 4, wherein the OTU/ODU framing module (33) comprises:
an OPU mapping unit (330) configured for fixedly filling the 10GFC service signal with the rate of the 10GE signal and encapsulating the 10GFC service signal after the fixed filling into an OPU if the 10GFC service signal with the rate of the 10GE signal is finally mapped into the OTU2e/ODU2e signal, or, encapsulating the 10GFC service signal with the rate of the 10GE signal into an OPU if the 10GFC service signal with the rate of the 10GE signal is finally mapped into the OTU1e/ODU1e signal;
an ODU framing unit (331) configured for adding ODU overhead to the OPU, encapsulating it into an ODU frame, and outputting the ODU2e signal or the ODU1e signal; and
an OTU framing unit (332) configured for adding OTU overhead to the ODU2e signal or the ODU1e signal, encapsulating the ODU2e signal or the ODU1e signal into an OTU frame, and outputting the OTU2e signal or the OTU1e signal.

6. A method for receiving a 10GFC service in an optical transport network, OTN, comprising:
i) receiving (41), an OTU2e/ODU2e signal which carries a 10GFC service from a network side, or receiving, an OTU1e/ODU1e signal which carries a 10GFC service from a network side;
ii) de-framing (42), the received OTU2e/ODU2e signal into a 10GFC service signal with a rate of a 10GE signal, or de-framing, the received OTU1e/ODU1e signal into a 10GFC service signal with a rate of a 10GE signal;
iii) adjusting (43), the rate of the 10GFC service signal with the rate of the 10GE signal to a 10GFC service signal with a rate of 10.51875Gbps; and
Iv) sending (44), the 10GFC service signal with a rate of 10.51875Gbps to a user side,
wherein step iii) further comprises:
decoding, the 10GFC service signal with the rate of the 10GE signal to get a 10GFC service signal with a rate of 10.2Gbps; and
coding, the 10GFC se rvice signal with the rate of 10.2Gbps to get the 10GFC service signal with the rate of 10.51875Gbps by way of 64/66B.

7. The method according to claim 6, wherein step ii) comprises:
judging, whether the signal received from the network side is an OTU signal or an ODU signal; if it is an OTU signal, de-framing, the OTU signal and outputting an ODU signal; and
de-framing, the ODU signal, outputting an OPU signal, and de-mapping, the OPU signal into the 10 GFC service signal with the rate of the 10GE signal.

8. An apparatus for receiving a 10GFC service in an optical transport network, OTN, comprising:
a receiving module (61) configured for receiving an OTU2e/ODU2e signal which carries a 10GFC service from a network side, or receiving an OTU1e/ODU1e signal which carries a 10GFC service from a network side;
an ODU/OTU de-framing module (62) configured for de-framing the received OTU2e/ODU2e signal into a 10GFC service signal with a rate of a 10GE signal, or de-framing the received OTU1e/ODU1e signal into a 10GFC service signal with a rate of a 10GE signal;
a rate restoring module (63) configured for adjusting the rate of the 10GFC service signal with the rate of the 10GE signal to a 10GFC service signal with a rate of 10.51875Gbps; and
a sending module (64) configured for sending the 10GFC service signal with the rate of 10.51875Gbps to a user side,
wherein the rate restoring module (63) is further configured for
decoding the 10GFC service signal with the rate of the 10GE signal to get a 10GFC service signal with a rate of 10.2Gbps; and
coding the 10GFC service signal with the rate of 10.2Gbps to get the 10GFC service signal with the rate of 10.51875Gbps by way of 64/66B.

9. The apparatus according to claim 8, wherein the ODU/OTU de-framing module (62) comprises:
an OTU de-framing unit (621) configured for de-framing the OTU2e signal or the OTU1e signal which carries the 10GFC service received from the network side by way of OTU and outputting an ODU2e signal or an ODU1e signal;
an ODU de-framing unit (622) configured for de-framing the ODU2e signal or the ODU1e signal by way of ODU and outputting an OPU signal; and
an OPU de-mapping unit (623) configured for de-mapping the OPU signal into the 10GFC service signal with the rate of the 10GE signal.

## Patentansprüche

1. Verfahren zum Senden eines Faserkanal-10 Gigabit-, 10GFC, Dienstes in einem optischen Transportnetzwerk, OTN, umfassend:
a) Empfangen (11) eines 10GFC-Dienstsignals mit einer Rate von 10,51875 Gbps von einer Benutzerseite;
b) Einstellen (12), des empfangenen 10GFC-Dienstsignals mit der Rate von 10,51875 Gbps auf ein 10GFC-Dienstsignal mit einer Rate eines 10 Gigabit Ethernet-, 10GE, Signals, wobei die Rate des 10GE-Signals 10,3125 Gbps ist;
c) Abbilden (13) des 10GFC-Dienstsignals mit der Rate des 10GE-Signals in ein OTU2e/ODU2e-Signal oder Abbilden (13) des 10GFC-Dienstsignals mit der Rate des 10GE-Signals in ein OTU1e/ODU1e-Signal; und
d) Senden (14) des OTU2e/ODU2e-Signals zum OTN zum Übertragen oder Senden des OTU1e/ODU1e-Signals zum OTN zur Übertragung,
wobei Schritt b) umfasst:
Decodieren des 10GFC-Dienstsignals mit der Rate von 10,51875 Gbps mittels 64/66B, um ein 10GFC-Dienstsignal mit einer Rate von 10,2 Gbps zu erhalten; und
Codieren des 10GFC-Dienstsignals mit der Rate von 10,2 Gbps, um das 10GFC-Dienstsignal mit der Rate des 10GE-Signals zu erhalten.

2. Verfahren nach Anspruch 1, wobei Schritt c) umfasst:
wenn das 10GFC-Dienstsignal mit der Rate des 10GE-Signals letztendlich in das OTU2e/ODU2e-Signal abgebildet wird (130), unveränderliches Füllen (131) des 10GFC-Dienstsignals mit der Rate des 10GE-Signals und Einkapseln (132) des 10GFC-Dienstsignals nach dem unveränderlichen Füllen in eine Nutzlasteinheit eines optischen Kanals, OPU, oder, falls das 10GFC-Dienstsignal mit der Rate des 10GE-Signals letztendlich in das OTU1e/ODU1e-Signal (130) abgebildet wird, Einkapseln (132) des 10GFC-Dienstsignals mit der Rate des 10GE-Signals in eine OPU; und
Hinzufügen (133) eines Overheads einer Dateneinheit des optischen Kanals, ODU, zur OPU, Einkapseln (133) desselben in einen ODU-Frame und Ausgeben (134) des ODU2e-Signals oder des ODU1e-Signals.

3. Verfahren nach Anspruch 2, wobei Schritt c) weiter umfasst:
Hinzufügen (135) eines Overheads einer Transporteinheit des optischen Kanals, OTU, zum ODU2e-Signal oder ODU1e-Signal, Einkapseln (135) des ODU2e-Signals oder ODU1e-Signals in einen OTU-Frame und Ausgeben des OTU2e-Signals oder OTU1e-Signals.

4. Vorrichtung zum Senden eines 10GFC-Dienstes in einem optischen Transportnetzwerk, OTN, umfassend:
ein Empfangsmodul (31), das konfiguriert ist zum Empfangen eines 10GFC-Dienstsignals mit einer Rate von 10,51875 Gbps von einer Benutzerseite;
ein Ratenanpassungsmodul (32), das konfiguriert ist zum Einstellen einer Rate des empfangenen 10GFC-Dienstsignals mit der Rate von 10,51875 Gbps auf ein 10GFC-Dienstsignal mit einer Rate eines 10GE-Signals;
ein OTU/ODU-Framing-Modul (33), das konfiguriert ist zum Abbilden des 10GFC-Dienstsignals mit der Rate des 10GE-Signals in ein OTU2e/ODU2e-Signal oder Abbilden des 10GFC-Dienstsignals mit der Rate des 10GE-Signals in ein OTU1e/ODU1e-Signal; und
ein Sendemodul (34), das konfiguriert ist zum Senden des OTU2e/ODU2e-Signals zum OTN zum Übertragen oder Senden des OTU1e/ODU1e-Signals zum OTN zur Übertragung;
wobei das Ratenanpassungsmodul (32) umfasst:
eine Decodiereinheit, die konfiguriert ist zum Decodieren des 10GFC-Dienstsignals mit der Rate von 10,51875 Gbps mittels 64/66B, um ein 10GFC-Dienstsignal mit einer Rate von 10,2 Gbps zu erhalten; und
eine Codiereinheit, die konfiguriert ist zum Codieren des 10GFC-Dienstsignals mit der Rate von 10,2 Gbps, um das 10GFC-Dienstsignal mit der Rate des 10GE-Signals zu erhalten.

5. Vorrichtung nach Anspruch 4, wobei das OTU/ODU-Framing-Modul (33) umfasst:
eine OPU-Abbildungseinheit (330), die konfiguriert ist zum unveränderlichen Füllen des 10GFC-Dienstsignals mit der Rate des 10GE-Signals und Einkapseln des 10GFC-Dienstsignals nach dem unveränderlichen Füllen in eine OPU, falls das 10GFC-Dienstsignal mit der Rate des 10GE-Signals letztendlich in das OTU2e/ODU2e-Signal abgebildet wird, oder Einkapseln des 10GFC-Dienstsignals mit der Rate des 10GE-Signals in eine OPU, falls das 10GFC-Dienstsignal mit der Rate des 10GE-Signals letztendlich in das OTU1e/ODU1e-Signal abgebildet wird;
eine ODU-Framing-Einheit (331), die konfiguriert ist zum Hinzufügen eines ODU-Overheads zur OPU, Einkapseln desselben in einen ODU-Frame und Ausgeben des ODU2e-Signals oder des ODU1e-Signals; und
eine OTU-Framing-Einheit (332), die konfiguriert ist zum Hinzufügen eines OTU-Overheads zum ODU2e-Signal oder ODU1e-Signal, Einkapseln des ODU2e-Signals oder ODU1e-Signals in einen OTU-Frame und Ausgeben des OTU2e-Signals oder OTU1e-Signals.

6. Verfahren zum Empfangen eines 10GFC-Dienstes in einem optischen Transportnetzwerk, OTN, umfassend:
i) Empfangen (41) eines OTU2e/ODU2e-Signals, das einen 10GFC-Dienst trägt, von einer Netzwerkseite oder Empfangen eines OTU1e/ODU1e-Signals, das einen 10GFC-Dienst trägt, von einer Netzwerkseite;
ii) De-Framing (42) des empfangenen OTU2e/ODU2e-Signals in ein 10GFC-Dienstsignal mit einer Rate eines 10GE-Signals oder De-Framing des empfangenen OTU1e/ODU1e-Signals in ein 10GFC-Dienstsignal mit einer Rate eines 10GE-Signals;
iii) Einstellen (43) der Rate des 10GFC-Dienstsignals mit der Rate des 10GE-Signals auf ein 10GFC-Dienstsignal mit einer Rate von 10,51875 Gbps; und
iv) Senden (44) des 10GFC-Dienstsignals mit einer Rate von 10,51875 Gbps zu einer Benutzerseite,
wobei Schritt iii) weiter umfasst:
Decodieren des 10GFC-Dienstsignals mit der Rate des 10GE-Signals, um ein 10GFC-Dienstsignal mit einer Rate von 10,2 Gbps zu erhalten; und
Codieren des 10GFC-Dienstsignals mit der Rate von 10,2 Gbps, um das 10GFC-Dienstsignal mit der Rate von 10,51875 Gbps mittels 64/66B zu erhalten.

7. Verfahren nach Anspruch 6, wobei Schritt ii) umfasst:
Beurteilen, ob das Signal, das von der Netzwerkseite empfangen wurde, ein OTU-Signal oder ein ODU-Signal ist; falls es ein OTU-Signal ist, De-Framing des OTU-Signals und Ausgeben eines ODU-Signals; und
De-Framing des ODU-Signals, Ausgeben eines OPU-Signals und De-Mapping des OPU-Signals in das 10GFC-Dienstsignal mit der Rate des 10GE-Signals.

8. Vorrichtung zum Empfangen eines 10GFC-Dienstes in einem optischen Transportnetzwerk, OTN, umfassend:
ein Empfangsmodul (61), das konfiguriert ist zum Empfangen eines OTU2e/ODU2e-Signals, das einen 10GFC-Dienst trägt, von einer Netzwerkseite oder Empfangen eines OTU1e/ODU1e-Signals, das einen 10GFC-Dienst trägt, von einer Netzwerkseite;
ein ODU/OTU-De-Framing-Modul (62), das konfiguriert ist zum De-Framing des empfangenen OTU2e/ODU2e-Signals in ein 10GFC-Dienstsignal mit einer Rate eines 10GE-Signals oder De-Framing des empfangenen OTU1e/ODU1e-Signals in ein 10GFC-Dienstsignal mit einer Rate eines 10GE-Signals;
ein Ratenwiederherstellungsmodul (63), das konfiguriert ist zum Einstellen der Rate des 10GFC-Dienstsignals mit der Rate des 10GE-Signals auf ein 10GFC-Dienstsignal mit einer Rate von 10,51875 Gbps; und
ein Sendemodul (64), das konfiguriert ist zum Senden des 10GFC-Dienstsignals mit der Rate von 10,51875 Gbps zu einer Benutzerseite,
wobei das Ratenwiederherstellungsmodul (63), weiter konfiguriert ist zum
Decodieren des 10GFC-Dienstsignals mit der Rate des 10GE-Signals, um ein 10GFC-Dienstsignal mit einer Rate von 10,2 Gbps zu erhalten; und
Codieren des 10GFC-Dienstsignals mit der Rate von 10,2 Gbps, um das 10GFC-Dienstsignal mit der Rate von 10,51875 Gbps mittels 64/66B zu erhalten.

9. Vorrichtung nach Anspruch 8, wobei das ODU/OTU-De-Framing-Modul (62) umfasst:
eine OTU-De-Framing-Einheit (621), die konfiguriert ist zum De-Framing des OTU2e-Signals oder des OTU1e-Signals, das den 10GFC-Dienst trägt, das von der Netzwerkseite mittels OTU empfangen wurde, und Ausgeben eines ODU2e-Signals oder eines ODU1e-Signals; und
eine ODU-De-Framing-Einheit (622), die konfiguriert ist zum De-Framing des ODU2e-Signals oder des ODU1e-Signals mittels ODU und Ausgeben eines OPU-Signals; und
eine OPU-De-Mapping-Einheit (623), die konfiguriert ist zum De-Mapping des OPU-Signals in das 10GFC-Dienstsignal mit der Rate des 10GE-Signals.

## Revendications

1. Procédé d'envoi d'un service Fibre Channel à 10 gigabits, 10GFC, dans un réseau de transport optique, OTN, comprenant :
a) la réception (11) d'un signal de service 10GFC avec un débit de 10,51875 Gbps depuis un côté utilisateur ;
b) l'ajustement (12) du signal de service 10GFC reçu avec le débit de 10,51875 Gbps à un signal de service 10GFC avec un débit d'un signal Ethernet à 10 gigabits, 10GE, le débit du signal 10GE étant de 10,3125 Gbps ;
c) le mappage (13) du signal de service 10GFC avec le débit du signal 10GE en un signal OTU2e/ODU2e, ou le mappage (13), du signal de service 10GFC avec le débit du signal 10GE en un signal OTU1e/ODU1e ; et
d) l'envoi (14) du signal OTU2e/ODU2e à l'OTN pour transmission, ou l'envoi du signal OTU1e/ODU1e à l'OTN pour transmission,
dans lequel l'étape b) comprend :
le décodage du signal de service 10GFC avec le débit de 10,51875 Gbps au moyen de 64/66B pour obtenir un signal de service 10GFC avec un débit de 10,2 Gbps ; et
le codage du signal de service 10GFC avec le débit de 10,2 Gbps pour obtenir le signal de service 10GFC avec le débit du signal 10GE.

2. Procédé selon la revendication 1, dans lequel l'étape c) comprend :
si le signal de service 10GFC avec le débit du signal 10GE est finalement mappé en le signal OTU2e/ODU2e (130), le remplissage fixe (131) du signal de service 10GFC avec le débit du signal 10GE et l'encapsulation (132) du signal de service 10GFC après le remplissage fixe dans une unité de charge utile de canal optique, OPU, ou, si le signal de service 10GFC avec le débit du signal 10GE est finalement mappé en le signal OTU1e/ODU1e (130), l'encapsulation (132) du signal de service 10GFC avec le débit du signal 10GE dans une OPU ; et
l'ajout (133) d'un surdébit d'unité de données de canal optique, ODU, à l'OPU, son encapsulation (133), dans une trame ODU, et la délivrance en sortie (134) du signal ODU2e ou du signal ODU1e.

3. Procédé selon la revendication 2, dans lequel l'étape c) comprend en outre :
l'ajout (135), d'un surdébit d'unité de transport de canal optique, OTU, au signal ODU2e ou au signal ODU1e, l'encapsulation (135), du signal ODU2e ou du signal ODU1e dans une trame OTU, et la délivrance en sortie du signal OTU2e ou du signal OTU1e.

4. Appareil d'envoi d'un service 10GFC dans un réseau de transport optique, OTN, comprenant :
un module de réception (31) configuré pour recevoir un signal de service 10GFC avec un débit de 10,51875 Gbps depuis un côté utilisateur ;
un module d'adaptation de débit (32) configuré pour ajuster un débit du signal de service 10GFC reçu avec le débit de 10,51875 Gbps à un signal de service 10GFC avec un débit d'un signal 10GE ;
un module de verrouillage de trame OTU/ODU (33) configuré pour mapper le signal de service 10GFC avec le débit du signal 10GE en un signal OTU2e/ODU2e, ou mapper le signal de service 10GFC avec le débit du signal 10GE en un signal OTU1e/ODU1e ; et
un module d'envoi (34) configuré pour envoyer le signal OTU2e/ODU2e à l'OTN pour transmission, ou envoyer le signal OTU1e/ODU1e à l'OTN pour transmission,
dans lequel le module d'adaptation de débit (32) comprend :
une unité de décodage configurée pour décoder le signal de service 10GFC avec le débit de 10,51875 Gbps au moyen de 64/66B pour obtenir un signal de service 10GFC avec un débit de 10,2 Gbps ; et
une unité de codage configurée pour coder le signal de service 10GFC avec le débit de 10,2 Gbps pour obtenir le signal de service 10GFC avec le débit du signal 10GE.

5. Appareil selon la revendication 4, dans lequel le module de verrouillage de trame OTU/ODU (33) comprend :
une unité de mappage OPU (330) configurée pour remplir de façon fixe le signal de service 10GFC avec le débit du signal 10GE et encapsuler le signal de service 10GFC après le remplissage fixe dans une OPU si le signal de service 10GFC avec le débit du signal 10GE est finalement mappé en le signal OTU2e/ODU2e, ou pour encapsuler le signal de service 10GFC avec le débit du signal 10GE dans une OPU si le signal de service 10GFC avec le débit du signal 10GE est finalement mappé en le signal OTU1e/ODU1e ;
une unité de verrouillage de trame ODU (331) configurée pour ajouter un surdébit ODU à l'OPU, l'encapsuler dans une trame ODU, et délivrer en sortie le signal ODU2e ou le signal ODU1e ; et
une unité de verrouillage de trame OTU (332) configurée pour ajouter un surdébit OTU au signal ODU2e ou au signal ODU1e, encapsuler le signal ODU2e ou le signal ODU1e dans une trame OTU, et délivrer en sortie le signal OTU2e ou le signal OTU1e.

6. Procédé de réception d'un service 10GFC dans un réseau de transport optique, OTN, comprenant :
i) la réception (41) d'un signal OTU2e/ODU2e qui achemine un service 10GFC depuis un côté réseau, ou la réception d'un signal OTU1e/ODU1e qui achemine un service 10GFC depuis un côté réseau ;
ii) le déverrouillage de trame (42) du signal OTU2e/ODU2e reçu en un signal de service 10GFC avec un débit d'un signal 10GE, ou le déverrouillage de trame du signal OTU1e/ODU1e reçu en un signal de service 10GFC avec un débit d'un signal 10GE ;
iii) l'ajustement (43) du débit du signal de service 10GFC avec le débit du signal 10GE à un signal de service 10GFC avec un débit de 10,51875 Gbps ; et
iv) l'envoi (44) du signal de service 10GFC avec un débit de 10,51875 Gbps à un côté utilisateur,
dans lequel l'étape iii) comprend en outre :
le décodage du signal de service 10GFC avec le débit du signal 10GE pour obtenir un signal de service 10GFC avec un débit de 10,2 Gbps ; et
le codage du signal de service 10GFC avec le débit de 10,2 Gbps pour obtenir le signal de service 10GFC avec le débit de 10,51875 Gbps au moyen de 64/66B.

7. Procédé selon la revendication 6, dans lequel l'étape ii) comprend :
l'estimation que le signal reçu depuis le côté réseau est un signal OTU ou un signal ODU ; s'il s'agit d'un signal OTU, le déverrouillage de trame du signal OTU et la délivrance en sortie d'un signal ODU ; et
le déverrouillage de trame du signal ODU, la délivrance en sortie d'un signal OPU, et le démappage du signal OPU en le signal de service 10GFC avec le débit du signal 10GE.

8. Appareil de réception d'un service 10GFC dans un réseau de transport optique, OTN, comprenant :
un module de réception (61) configuré pour recevoir un signal OTU2e/ODU2e qui achemine un service 10GFC depuis un côté réseau, ou la réception d'un signal OTU1e/ODU1e qui achemine un service 10GFC depuis un côté réseau ;
un module de déverrouillage de trame ODU/OTU (62) configuré pour un déverrouillage de trame du signal OTU2e/ODU2e reçu en un signal de service 10GFC avec un débit d'un signal 10GE, ou le déverrouillage de trame du signal OTU1e/ODU1e reçu en un signal de service 10GFC avec un débit d'un signal 10GE ;
un module de restauration de débit (63) configuré pour ajuster le débit du signal de service 10GFC avec le débit du signal 10GE en un signal de service 10GFC avec un débit de 10,51875 Gbps ; et
un module d'envoi (64) configuré pour envoyer le signal de service 10GFC avec le débit de 10,51875 Gbps à un côté utilisateur,
dans lequel le module de restauration de débit (63) est en outre configuré pour
décoder le signal de service 10GFC avec le débit du signal 10GE pour obtenir un signal de service 10GFC avec un débit de 10,2 Gbps ; et
coder le signal de service 10GFC avec le débit de 10,2 Gbps pour obtenir le signal de service 10GFC avec le débit de 10,51875 Gbps au moyen de 64/66B.

9. Appareil selon la revendication 8, dans lequel le module de déverrouillage de trame ODU/OTU (62) comprend :
une unité de déverrouillage de trame OTU (621) configurée pour un déverrouillage de trame du signal OTU2e ou du signal OTU1e qui achemine le service 10GFC reçu depuis le côté réseau au moyen d'une OTU et la délivrance en sortie d'un signal ODU2e ou d'un signal ODU1e ;
une unité de déverrouillage de trame ODU (622) configurée pour un déverrouillage de trame du signal ODU2e ou du signal ODU1e au moyen d'une ODU et la délivrance en sortie d'un signal OPU ; et
une unité de démappage OPU (623) configurée pour démapper le signal OPU en le signal de service 10GFC avec le débit du signal 10GE.
